# EUROPEAN PATENT SPECIFICATION

(11) **EP 4 213 663 B1**
(45) Date of publication and mention of the grant of the patent: **04.11.2026**
(21) Application number: 21778543.5
(22) Date of filing: 15.09.2021
(51) Int. Cl.: A24F 40/465, H02M 7/48, H05B 6/10, H02M 7/537, H05B 6/06

(54) **APPARATUS FOR AN AEROSOL GENERATING DEVICE**
VORRICHTUNG FÜR EINE AEROSOLERZEUGUNGSVORRICHTUNG
APPAREIL POUR DISPOSITIF DE GÉNÉRATION D'AÉROSOL

(30) Priority: 17.09.2020 GB 202014643
(43) Date of publication of application: 26.07.2023
(73) Proprietor: Nicoventures Trading Limited, London WC2R 3LA (GB)
(72) Inventor: VINTOLA, Tomi, London WC2R 3LA (GB); ZHENG, Zhiyong, Longgang District, 518116 (CN)
(74) Representative: Whiting, Gary
(86) International application number: PCT/GB2021/052386
(87) International publication number: WO 2022/058723

(56) References cited:
- EP-A1- 2 811 810
- EP-A1- 3 582 586
- CN-A- 111 567 899
- US-A1- 2017 055 574
- US-A1- 2017 055 585
- US-A1- 2019 313 695

## Description

### Technical Field

The present specification relates to an apparatus for an aerosol generating device.

### Background

Smoking articles, such as cigarettes, cigars and the like burn tobacco during use to create tobacco smoke. Attempts have been made to provide alternatives to these articles by creating products that release compounds without combusting. For example, tobacco heating devices heat an aerosol generating substrate such as tobacco to form an aerosol by heating, but not burning, the substrate.

CN 111567899 discloses an electronic atomization device comprising: a heating unit for heating an aerosol-generating product; a resonance unit which is used for generating an electromagnetic field to heat the heating unit; a detection unit which is used for detecting the energy attenuation characteristic of the electromagnetic field and outputting a detection signal; and a control unit which is used for outputting an excitation signal to excite the resonance unit to generate an electromagnetic field and determining the state of the aerosol generating product according to the detection signal. The control unit excites the resonance unit to generate the electromagnetic field to enable the heating unit to inductively heat, the detection unit is used for detecting the energy attenuation characteristic of the electromagnetic field, and the control unit determines the state of the aerosol generating product according to the detection signal.

### Summary

In a first aspect, this specification describes an apparatus for an aerosol generating device comprising: a first resonant circuit comprising one or more inductive elements and one or more capacitive elements, wherein the one or more inductive elements of the first resonant circuit are for inductively heating a first susceptor arrangement to heat an aerosol generating material to thereby generate an aerosol; a first switching arrangement (such as a transistor switch) having a first state and a second state, wherein, in the first state, a varying current generated from a voltage supply flows through the one or more inductive elements of the first resonant circuit and, in the second state, the first switching arrangement is non-conducting; and a control module providing a first control signal for switching elements of the first switching arrangement, wherein the control module implements a heating phase of operation and a non-heating phase of operation of the first resonant circuit, wherein during the heating phase of operation, the first switching arrangement switches, under the control of the control module, between instances of the first state and instances of the second state, wherein each instance of the second state has a duration that is at least half an oscillation cycle of the first resonant circuit.

In some example embodiments, the one or more inductive elements and the one or more capacitive elements are arranged in parallel. Alternative arrangements (such as serial arrangements of the one or more inductive elements and the one or more capacitive elements) are also possible.

Each instance of the first state may have a fixed duration.

In the heating phase of operation, the first control signal may switch the first switching arrangement between the first and second states at a fixed frequency (such as 250kHz).

The control module may set a frequency and/or a duty cycle of the heating and non-heating phases of operation. For example, the frequency and/or the duty cycle of the heating and non-heating phases of operation may be set dependent on a heating requirement of the apparatus. Alternatively, or in addition, the frequency and/or the duty cycle of the heating and non-heating phases of operation may be set dependent on a temperature measurement.

The apparatus may further comprise a temperature sensor for measuring a temperature of a device to heated.

The apparatus may further comprise: a second resonant circuit comprising one or more inductive elements and one or more capacitive elements (e.g. arranged in parallel, although other arrangements, such as serial arrangements, are possible), wherein the one or more inductive elements of the second resonant circuit are for inductively heating a second susceptor arrangement to heat an aerosol generating material to thereby generate an aerosol; a second switching arrangement (such as a transistor switch) having a first state and a second state, wherein, in the first state, a varying current generated from the voltage supply flows through the one or more inductive elements of the second resonant circuit and, in the second state, the second switching arrangement is non-conducting; wherein: the control module provides a second control signal for switching elements of the second switching arrangement, wherein the control module implements a heating phase of operation and a non-heating phase of operation of the second resonant circuit, wherein during the heating phase of operation, the second switching arrangement switches, under the control of the control module, between instances of the first state and instances of the second state, wherein each instance of the second state has a duration that is at least half an oscillation cycle of the second resonant circuit.

The inductive element of the first resonant circuit may be provided at or near a distal end of an element to be heated and the inductive element of the second resonant circuit may be provided at or near a mouth end of the element to be heated. The frequency and/or the duty cycle of the heating and non-heating phases of operation of the first and second resonant circuits may be set dependent on heating requirements at the distal end and the mouth end of the element to be heated respectively.

The control module may set a frequency and/or a duty cycle of the heating and non-heating phases of operation such that the heating modes of the first and second resonant circuits are non-overlapping.

In some example embodiments, some or all of said inductive elements are inductive coils.

The said voltage supply may be a DC voltage supply (e.g. a battery supply).

In a second aspect, this specification describes an aerosol generating device (e.g. a non-combustible aerosol generating device) comprising any apparatus as described above with reference to the first aspect. The apparatus may, for example, comprise a tobacco heating system. The aerosol generating device may be configured to receive a removable article comprising an aerosol generating material. The aerosol generating material may comprise an aerosol generating substrate and an aerosol forming material. The said removable article may include said first susceptor arrangement.

In a third aspect, this specification describes an electronic smoking article comprising an aerosol generating device as described above with reference to the second aspect.

In a fourth aspect, this specification describes a method comprising: generating, obtaining or receiving a first control signal for switching elements of a first switching arrangement, wherein the control module implements a heating phase operation and a non-heating phase of operation of a first resonant circuit, wherein during the heating phase of operation, the first switching arrangement switches, under the control of the control module, between instances of the first state and instances of the second state, wherein each instance of the second state has a duration that is at least half an oscillation cycle of the first resonant circuit, wherein: the first resonant circuit comprises one or more inductive elements and one or more capacitive elements, wherein the one or more inductive elements of the first resonant circuit are for inductively heating a first susceptor arrangement to heat an aerosol generating material to thereby generate an aerosol; and the first switching arrangement has a first state and a second state, wherein, in the first state, a varying current is generated from a voltage supply and flows through the one or more inductive elements of the first resonant circuit and, in the second state, the first switching arrangement is non-conducting.

In some example embodiments, the one or more inductive elements and the one or more capacitive elements are arranged in parallel. Alternative arrangements (such as serial arrangements of the one or more inductive elements and the one or more capacitive elements) are also possible.

According to the invention, the method comprises setting a duration of each second state in said heating phase of operation such that each instance of the second state has a duration that is at least half an oscillation cycle of the first resonant circuit that is expected to occur during normal operation of the apparatus.

In the heating mode, the first control signal may switch the first switching arrangement between the first and second states at a fixed frequency.

The control module may set a frequency and/or a duty cycle of the heating and non-heating phases of operation. For example, the frequency and/or the duty cycle of the heating and non-heating phases of operation may be set dependent on a heating requirement. Alternatively, or in addition, the frequency and/or the duty cycle of the heating and non-heating phases of operation is set dependent on a temperature measurement.

The method may further comprise: generating, obtaining or receiving a second control signal for switching elements of a second switching arrangement, wherein the control module implements a heating phase of operation and a non-heating phase of operation of the second resonant circuit, wherein during the heating phase of operation, the second switching arrangement switches, under the control of the control module, between instances of the first state and instances of the second state, wherein each instance of the second state has a duration that is at least half an oscillation cycle of the second resonant circuit, wherein: the second resonant circuit comprises one or more inductive elements and one or more capacitive elements (which inductive and capacitive elements may be arranged in parallel, although other configurations, such as serial connections, are possible), wherein the one or more inductive elements of the second resonant circuit are for inductively heating a second susceptor arrangement to heat an aerosol generating material to thereby generate an aerosol; and the second switching arrangement has a first state and a second state, wherein, in the first state, a varying current is generated from a voltage supply and flows through the one or more inductive elements of the second resonant circuit and, in the second state, the second switching arrangement is non-conducting.

The inductive element of the first resonant circuit may be provided at a distal end of an element to be heated and the inductive element of the second resonant circuit is provided at a mouth end of the element to be heated. The frequency and/or the duty cycle of the heating and non-heating phases of operation of the first and second resonant circuits may be set dependent on heating requirement at the distal end and the mouth end of the element to be heated respectively.

The control module may set a frequency and/or a duty cycle of the heating and non-heating phases of operation such that the heating modes of the first and second resonant circuits are non-overlapping.

In a fifth aspect, this specification describes computer-readable instructions which, when executed by computing apparatus, cause the computing apparatus to perform any method as described with reference to the fourth aspect.

In a sixth aspect, this specification describes a kit of parts comprising an article for use in a non-combustible aerosol generating system, wherein the non-combustible aerosol generating system comprises an apparatus described above with reference to the first aspect or a device as described above with reference to the second aspect. The article may, for example, be a removable article comprising an aerosol generating material.

In a seventh aspect, this specification describes a computer program comprising instructions for causing an apparatus to perform: generating, obtaining or receiving a first control signal for switching elements of a first switching arrangement, wherein the control module implements a heating phase operation and a non-heating phase of operation of a first resonant circuit, wherein during the heating phase of operation, the first switching arrangement switches, under the control of the control module, between instances of the first state and instances of the second state, wherein each instance of the second state has a duration that is at least half an oscillation cycle of the first resonant circuit, wherein: the first resonant circuit comprises one or more inductive elements and one or more capacitive elements (which inductive and capacitive elements may be arranged in parallel or in series), wherein the one or more inductive elements of the first resonant circuit are for inductively heating a first susceptor arrangement to heat an aerosol generating material to thereby generate an aerosol; and the first switching arrangement has a first state and a second state, wherein, in the first state, a varying current is generated from a voltage supply and flows through the one or more inductive elements of the first resonant circuit and, in the second state, the first switching arrangement is non-conducting.

### Brief Description of the Drawings

Example embodiments will now be described, by way of example only, with reference to the following schematic drawings, in which:
FIG. 1 is a block diagram of a system in accordance with an example embodiment;
FIG. 2 shows a non-combustible aerosol provision device in accordance with an example embodiment;
FIG. 3 shows a non-combustible aerosol provision device in accordance with an example embodiment;
FIG. 4 is a view of an article for use with a non-combustible aerosol provision device in accordance with an example embodiment.
FIG. 5 is a block diagram of a circuit in accordance with an example embodiment;
FIG. 6 shows a signal used in accordance with an example embodiment;
FIG. 7 is a flow chart showing an algorithm in accordance with an example embodiment;
FIG. 8 is a plot demonstrating an aspect of an example embodiment;
FIG. 9 is a flow chart showing an algorithm in accordance with an example embodiment;
FIG. 10 is a flow chart showing an algorithm in accordance with an example embodiment;
FIG. 11 shows a signal used in accordance with an example embodiment;
FIG. 12 is a system in accordance with an example embodiment; and
FIG. 13 shows signals used in accordance with an example embodiment.

### Detailed Description

As used herein, the term "delivery system" is intended to encompass systems that deliver a substance to a user, and includes:
combustible aerosol provision systems, such as cigarettes, cigarillos, cigars, and tobacco for pipes or for roll-your-own or for make-your-own cigarettes (whether based on tobacco, tobacco derivatives, expanded tobacco, reconstituted tobacco, tobacco substitutes or other smokable material);
non-combustible aerosol provision systems that release compounds from an aerosolisable material without combusting the aerosolisable material, such as electronic cigarettes, tobacco heating products, and hybrid systems to generate aerosol using a combination of aerosolisable materials;
articles comprising aerosolisable material and configured to be used in one of these non-combustible aerosol provision systems; and
aerosol-free delivery systems, such as lozenges, gums, patches, articles comprising inhalable powders, and smokeless tobacco products such as snus and snuff, which deliver a material to a user without forming an aerosol, wherein the material may or may not comprise nicotine.

According to the present disclosure, a "combustible" aerosol provision system is one where a constituent aerosolisable material of the aerosol provision system (or component thereof) is combusted or burned in order to facilitate delivery to a user.

According to the present disclosure, a "non-combustible" aerosol provision system is one where a constituent aerosolisable material of the aerosol provision system (or component thereof) is not combusted or burned in order to facilitate delivery to a user. In embodiments described herein, the delivery system is a non-combustible aerosol provision system, such as a powered non-combustible aerosol provision system.

In one embodiment, the non-combustible aerosol provision system is an electronic cigarette, also known as a vaping device or electronic nicotine delivery system (END), although it is noted that the presence of nicotine in the aerosolisable material is not a requirement.

In one embodiment, the non-combustible aerosol provision system is a tobacco heating system, also known as a heat-not-burn system.

In one embodiment, the non-combustible aerosol provision system is a hybrid system to generate aerosol using a combination of aerosolisable materials, one or a plurality of which may be heated. Each of the aerosolisable materials may be, for example, in the form of a solid, liquid or gel and may or may not contain nicotine. In one embodiment, the hybrid system comprises a liquid or gel aerosolisable material and a solid aerosolisable material. The solid aerosolisable material may comprise, for example, tobacco or a non-tobacco product.

Typically, the non-combustible aerosol provision system may comprise a non-combustible aerosol provision device and an article for use with the non-combustible aerosol provision system. However, it is envisaged that articles which themselves comprise a means for powering an aerosol generating component may themselves form the non-combustible aerosol provision system.

In one embodiment, the non-combustible aerosol provision device may comprise a power source and a controller. The power source may be an electric power source or an exothermic power source. In one embodiment, the exothermic power source comprises a carbon substrate which may be energised so as to distribute power in the form of heat to an aerosolisable material or heat transfer material in proximity to the exothermic power source. In one embodiment, the power source, such as an exothermic power source, is provided in the article so as to form the non-combustible aerosol provision.

In one embodiment, the article for use with the non-combustible aerosol provision device may comprise an aerosolisable material, an aerosol generating component, an aerosol generating area, a mouthpiece, and/or an area for receiving aerosolisable material.

In one embodiment, the aerosol generating component is a heater capable of interacting with the aerosolisable material so as to release one or more volatiles from the aerosolisable material to form an aerosol. In one embodiment, the aerosol generating component is capable of generating an aerosol from the aerosolisable material without heating. For example, the aerosol generating component may be capable of generating an aerosol from the aerosolisable material without applying heat thereto, for example via one or more of vibrational, mechanical, pressurisation or electrostatic means.

In one embodiment, the aerosolisable material may comprise an active material, an aerosol forming material and optionally one or more functional materials. The active material may comprise nicotine (optionally contained in tobacco or a tobacco derivative) or one or more other non-olfactory physiologically active materials. A non-olfactory physiologically active material is a material which is included in the aerosolisable material in order to achieve a physiological response other than olfactory perception. The active substance as used herein may be a physiologically active material, which is a material intended to achieve or enhance a physiological response. The active substance may for example be selected from nutraceuticals, nootropics, psychoactives. The active substance may be naturally occurring or synthetically obtained. The active substance may comprise for example nicotine, caffeine, taurine, theine, vitamins such as B6 or B12 or C, melatonin, cannabinoids, or constituents, derivatives, or combinations thereof. The active substance may comprise one or more constituents, derivatives or extracts of tobacco, cannabis or another botanical. In some embodiments, the active substance comprises nicotine. In some embodiments, the active substance comprises caffeine, melatonin or vitamin B12.

The aerosol forming material may comprise one or more of glycerine, glycerol, propylene glycol, diethylene glycol, triethylene glycol, tetraethylene glycol, 1,3-butylene glycol, erythritol, meso-Erythritol, ethyl vanillate, ethyl laurate, a diethyl suberate, triethyl citrate, triacetin, a diacetin mixture, benzyl benzoate, benzyl phenyl acetate, tributyrin, lauryl acetate, lauric acid, myristic acid, and propylene carbonate.

The one or more functional materials may comprise one or more of flavours, carriers, pH regulators, stabilizers, and/or antioxidants.

In one embodiment, the article for use with the non-combustible aerosol provision device may comprise aerosolisable material or an area for receiving aerosolisable material. In one embodiment, the article for use with the non-combustible aerosol provision device may comprise a mouthpiece. The area for receiving aerosolisable material may be a storage area for storing aerosolisable material. For example, the storage area may be a reservoir. In one embodiment, the area for receiving aerosolisable material may be separate from, or combined with, an aerosol generating area.

Aerosolisable material, which also may be referred to herein as aerosol generating material, is material that is capable of generating aerosol, for example when heated, irradiated or energized in any other way. Aerosolisable material may, for example, be in the form of a solid, liquid or gel which may or may not contain nicotine and/or flavourants. In some embodiments, the aerosolisable material may comprise an "amorphous solid", which may alternatively be referred to as a "monolithic solid" (i.e. non-fibrous). In some embodiments, the amorphous solid may be a dried gel. The amorphous solid is a solid material that may retain some fluid, such as liquid, within it.

The aerosolisable material may be present on a substrate. The substrate may, for example, be or comprise paper, card, paperboard, cardboard, reconstituted aerosolisable material, a plastics material, a ceramic material, a composite material, glass, a metal, or a metal alloy.

A consumable is an article comprising or consisting of aerosol-generating material, part or all of which is intended to be consumed during use by a user. A consumable may comprise one or more other components, such as an aerosol-generating material storage area, an aerosol-generating material transfer component, an aerosol generation area, a housing, a wrapper, a mouthpiece, a filter and/or an aerosol-modifying agent. A consumable may also comprise an aerosol generator, such as a heater, that emits heat to cause the aerosol-generating material to generate aerosol in use. The heater may, for example, comprise combustible material, a material heatable by electrical conduction, or a susceptor.

A susceptor is a material that is heatable by penetration with a varying magnetic field, such as an alternating magnetic field. The susceptor may be an electrically-conductive material, so that penetration thereof with a varying magnetic field causes induction heating of the heating material. The heating material may be magnetic material, so that penetration thereof with a varying magnetic field causes magnetic hysteresis heating of the heating material. The susceptor may be both electrically-conductive and magnetic, so that the susceptor is heatable by both heating mechanisms. The device that is configured to generate the varying magnetic field is referred to as a magnetic field generator, herein.

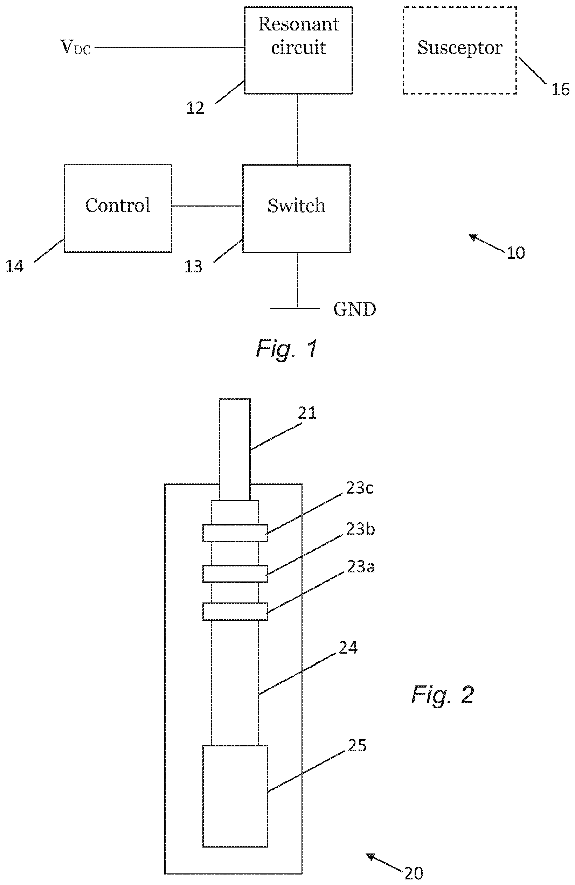

FIG. 1 is a block diagram of a system, indicated generally by the reference numeral 10, in accordance with an example embodiment. The system 10 comprises a resonant circuit 12 (e.g. an LC resonant circuit), a switching module 13 and a control module 14. A power source (V_{DC}) in the form of a direct current (DC) voltage supply is provided to the resonant circuit 12. The power source may, for example, be supplied by a battery.

The resonant circuit 12 may comprise an inductor and a capacitor connected in parallel. The resonant circuit may be used for inductively heating a susceptor arrangement 16 to heat an aerosol generating material, as discussed in detail below. Heating the aerosol generating material may thereby generate an aerosol (as discussed further below).

The control module 14 provides a control signal for switching the switching module 13 between a first state and a second state. In the first state, a current is drawn from the voltage supply through the resonant circuit 12 (whereby an inductor of the resonant circuit is charged). In the second state, the first switching module is non-conducting. If the inductor of the resonant circuit 12 is charged when the switching module 13 switches from the first state to the second state, then the resonant circuit will resonant, with charge flowing from the inductor to the capacitor and back again.

The control module 14 implements a heating phase of operation and a non-heating phase of operation of the system 10. In the heating phase of operation, the first switching arrangement switches, under the control of the control module 14, between instances of the first state and instances of the second state. As discussed in detail below, this switching causes the susceptor 16 to be heated.

The system 10 can be used with a wide variety of susceptor arrangements. Some embodiments are discussed below by way of example.

FIG. 2 shows a non-combustible aerosol provision device, indicated generally by the reference numeral 20, in accordance with an example embodiment. FIG. 2 is a perspective illustration of an aerosol provision device 20 with an outer cover removed. The aerosol provision device 20 may comprise a replaceable article 21 that may be inserted in the aerosol provision device 20 to enable heating of a susceptor (which may, for example, be comprised within the article 21).

The aerosol provision device 20 comprises a plurality of inductive elements 23a, 23b, and 23c, and one or more air tube extenders 24 and 25. The one or more air tube extenders 24 and 25 may be optional.

The plurality of inductive elements 23a, 23b, and 23c may each form part of a resonant circuit, such as the resonant circuit 12. The inductive elements 23a, 23b and 23c may each comprise a helical inductor coil. In one example, the helical inductor coil is made from Litz wire/cable which is wound in a helical fashion to provide the helical inductor coil. Many alternative inductor formations are possible, such as inductors formed within a printed circuit board. The use of three inductive elements 23a, 23b and 23c is not essential to all example embodiments. Thus, the aerosol generating device 20 may comprise one or more inductive elements.

A susceptor may be provided as part of the article 21. In an example embodiment, when the article 21 is inserted in aerosol generating device 20, the aerosol generating device 20 may be turned on due to the insertion of the article 21. This may be due to detecting the presence of the article 21 in the aerosol generating device using an appropriate sensor (e.g., a light sensor) or, in cases where the susceptor forms a part of the article 21, by detecting the presence of the susceptor using the resonant circuit 12, for example. When the aerosol generating device 20 is turned on, the inductive elements 23 may cause the article 21 to be inductively heated through the susceptor. In an alternative embodiment, the susceptor may be provided as part of the aerosol generating device 20 (e.g. as part of a holder for receiving the article 21).

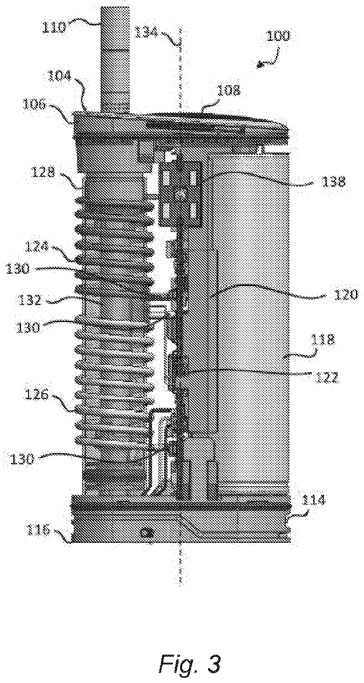

The aerosol generating device 20 is one example aerosol generating device. Many variants and alternatives are possible. For example, FIG. 3 shows a non-combustible aerosol provision device, indicated generally by the reference numeral 100, in accordance with an example embodiment.

As shown in FIG. 3, a first end member 106 is arranged at one end of the device 100 and a second end member 116 is arranged at an opposite end of the device 100. A lid 108 defines a top surface of the device 100.

The end of the device closest to an opening 104 may be known as the proximal (or mouth) end of the device 100 because, in use, it is closest to the mouth of the user. The other end of the device furthest away from the opening 104 may be known as the distal end of the device 100. In use, an article 110 (similar to the article 21 described above) is inserted into the opening 104.

The device 100 further comprises a power source 118 such as a battery, e.g. a rechargeable or non-rechargeable battery. The battery is electrically coupled to a heating assembly of the device 100 to supply electrical power when required and under control of a controller (not shown) to heat the aerosol generating material. In this example, the battery is connected to a central support 120, which holds the battery in place.

The device 100 further comprises at least one electronics module 122. The module 122 may comprises, for example, a printed circuit board (PCB). The PCB may support at least one controller, such as a processor, and memory.

In the device 100, the heating assembly is an inductive heating assembly and comprises various components to heat the aerosol generating material of the article 110 via an inductive heating process. Induction heating is a process of heating an electrically conducting object (such as a susceptor) by electromagnetic induction. An inducting heating assembly may comprise an inductive element, for example one or more inductor coils, and a device for passing a varying electric current through the inductive current. The system 10 is an example of such an inductive heating system.

The varying electric current in the inductive element produces a varying magnetic field. The varying magnetic field penetrates a susceptor suitable positioned with respect to the inductive element, and generates eddy currents inside the susceptor. The susceptor has electrical resistance to the eddy currents, and hence the flow of the eddy currents against this resistance causes the susceptor to be heated by Joule heating.

The induction heating assembly of the device 100 comprises a susceptor 132, a first inductor coil 124 and a second inductor coil 126. The first and second inductors coils 124, 126 are made from an electrically conducting material, such as Litz wire/cable wound in a helical fashion to provide helical inductor coils.

The first inductor coil 124 is configured to generate a first magnetic field for heating a first section of the susceptor 132 and the second inductor coil 126 is configured to generate a second varying magnetic field for heating a second section of the susceptor 132. Of course, two inductors are provided by way of example - more or fewer inductors could be provided (for example, a single inductor is provided as part of the resonant circuit in the system 10 described above).

The susceptor 132 of this example is hollow and therefore defines a receptacle within which aerosol generating material is received. For example, the article 110 can be inserted into the susceptor 132.

The device 100 further comprises an insulating member 128, which may be constructed from poly ether ketone (PEEK).

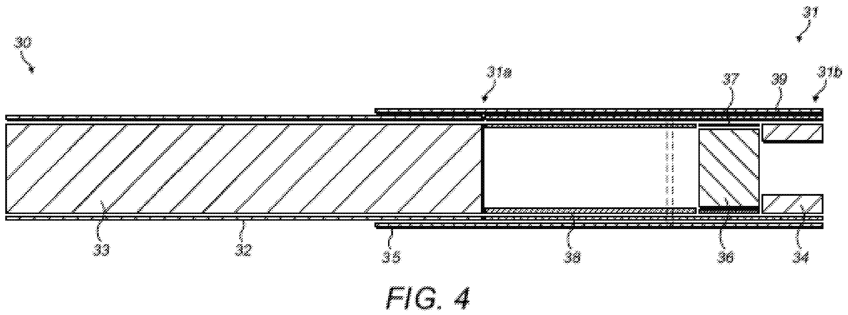

FIG. 4 is a view of an article, indicated generally by the reference numeral 30, for use with a non-combustible aerosol provision device in accordance with an example embodiment. The article 30 is an example of the articles 21 and 110 described above with reference to FIGS. 2 and 3.

The article 30 comprises a mouthpiece 31, and a cylindrical rod of aerosol generating material 33, in the present case tobacco material, connected to the mouthpiece 31. The aerosol generating material 33 provides an aerosol when heated, for instance within a non-combustible aerosol generating device, such as the aerosol generating device 20 or 100, as described herein. The aerosol generating material 33 is wrapped in a wrapper 32. The wrapper 32 can, for instance, be a paper or paper-backed foil wrapper. The wrapper 32 may be substantially impermeable to air.

In one embodiment, the wrapper 32 comprises aluminium foil. Aluminium foil has been found to be particularly effective at enhancing the formation of aerosol within the aerosol generating material 33. In one example, the aluminium foil has a metal layer having a thickness of about 6 µm. The aluminium foil may have a paper backing. However, in alternative arrangements, the aluminium foil can have other thicknesses, for instance between 4 µm and 16 µm in thickness. The aluminium foil also need not have a paper backing, but could have a backing formed from other materials, for instance to help provide an appropriate tensile strength to the foil, or it could have no backing material. Metallic layers or foils other than aluminium can also be used. Moreover, it is not essential that such metallic layers are provided as part of the article 30; for example, such a metallic layer could be provided as part of the apparatus 20 or 100.

The aerosol generating material 33, also referred to herein as an aerosol generating substrate 33, comprises at least one aerosol forming material. In the present example, the aerosol forming material is glycerol. In alternative examples, the aerosol forming material can be another material as described herein or a combination thereof. The aerosol forming material has been found to improve the sensory performance of the article, by helping to transfer compounds such as flavour compounds from the aerosol generating material to the consumer.

As shown in FIG. 4, the mouthpiece 31 of the article 30 comprises an upstream end 31a adjacent to an aerosol generating substrate 33 and a downstream end 31b distal from the aerosol generating substrate 33. The aerosol generating substrate may comprise tobacco, although alternatives are possible.

The mouthpiece 31, in the present example, includes a body of material 36 upstream of a hollow tubular element 34, in this example adjacent to and in an abutting relationship with the hollow tubular element 34. The body of material 36 and hollow tubular element 34 each define a substantially cylindrical overall outer shape and share a common longitudinal axis. The body of material 36 is wrapped in a first plug wrap 37. The first plug wrap 37 may have a basis weight of less than 50 gsm, such as between about 20 gsm and 40 gsm.

In the present example the hollow tubular element 34 is a first hollow tubular element 34 and the mouthpiece includes a second hollow tubular element 38, also referred to as a cooling element, upstream of the first hollow tubular element 34. In the present example, the second hollow tubular element 38 is upstream of, adjacent to and in an abutting relationship with the body of material 36. The body of material 36 and second hollow tubular element 38 each define a substantially cylindrical overall outer shape and share a common longitudinal axis. The second hollow tubular element 38 is formed from a plurality of layers of paper which are parallel wound, with butted seams, to form the tubular element 38. In the present example, first and second paper layers are provided in a two-ply tube, although in other examples 3, 4 or more paper layers can be used forming 3, 4 or more ply tubes. Other constructions can be used, such as spirally wound layers of paper, cardboard tubes, tubes formed using a papier-mâché type process, moulded or extruded plastic tubes or similar. The second hollow tubular element 38 can also be formed using a stiff plug wrap and/or tipping paper as the second plug wrap 39 and/or tipping paper 35 described herein, meaning that a separate tubular element is not required.

The second hollow tubular element 38 is located around and defines an air gap within the mouthpiece 31 which acts as a cooling segment. The air gap provides a chamber through which heated volatilised components generated by the aerosol generating material 33 may flow. The second hollow tubular element 38 is hollow to provide a chamber for aerosol accumulation yet rigid enough to withstand axial compressive forces and bending moments that might arise during manufacture and whilst the article 21 is in use. The second hollow tubular element 38 provides a physical displacement between the aerosol generating material 33 and the body of material 36. The physical displacement provided by the second hollow tubular element 38 will provide a thermal gradient across the length of the second hollow tubular element 38.

Of course, the article 30 is provided by way of example only. The skilled person will be aware of many alternative arrangements of such an article that could be used in the systems described herein.

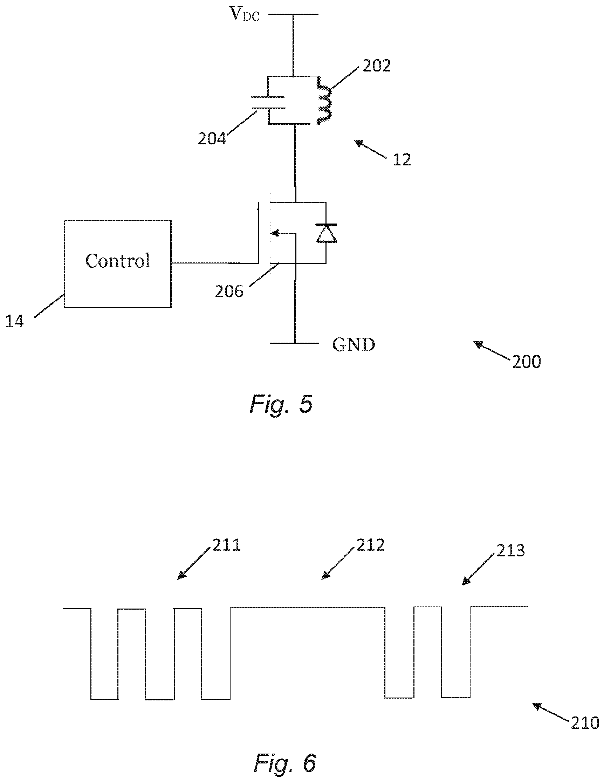

FIG. 5 is a block diagram of a circuit, indicated generally by the reference numeral 200, in accordance with an example embodiment. The circuit 200 is an example implementation of the system 10 described above.

The circuit 200 includes the control module 14 of the system 10 described above. The circuit 200 further comprises an inductor 202 and a capacitor 204 arranged in parallel (implementing the resonant circuit 12) and a transistor 206 (implementing the switching module 13). The resonant circuit formed of the inductor 202 and the capacitor 204 are for inductively heating a susceptor arrangement (not shown) as discussed in detail above.

The transistor 206 has a first state and a second state dependent on the output of the control module 14. In the first state, the transistor 206 is conducting such that a varying current generated from the voltage supply V_{DC} flows through the inductor 202 (thereby charging the inductor). The voltage supply may be provided by a battery (e.g. a battery of an aerosol generating device). The battery voltage may be variable (to a limited degree) over time.

In the second state, the first switching arrangement is non-conducting, such that the inductor 202 (which has been charged in the first state) discharges, thereby charging the capacitor 204. If the switching arrangement stayed in the second state, the resonant circuit 12 would resonate at a frequency dependent on the inductance (L) and capacitance (C) of the inductor 202 and the capacitor 204, given by the formula: $f = \frac{1}{2 π LC}$ .

FIG. 6 shows a signal, indicated generally by the reference numeral 210, used in accordance with an example embodiment. The signal 210 is the output of the control module 14 that is provided to the input of the transistor 206.

The signal 210 includes a first phase 211, a second phase 212 and a third phase 213. The first phase 211 and the third phase 213 are heating phases of operation of the resonant circuit 12. The second phase 212 is a non-heating phase of operation of the resonant circuit.

During the heating phases of operation, the output of the control circuit 14 repeatedly transitions between high and low voltage level such that the transistor 206 repeatedly switches between instances of the first and second states described above. Current flows in the resonant circuit during the first phase induce a current flow in the susceptor, thereby causing heating of the susceptor.

During the non-heating phase of operation, the output of the control circuit 14 is such that the transistor is turned on. Therefore, in the non-heating phase, one end of both the inductor 202 and the capacitor 204 are coupled to the voltage supply V_{DC} and the other end of the inductor 202 and the capacitor 204 are coupled to ground via the transistor 206.

The efficiency of the heating phase is dependent, at least in part, on the frequency of the switching of the transistor 206 during the heating phases 211 and 213. Indeed, the heating efficiency increases as the switching frequency approaches the resonant frequency of the resonant circuit.

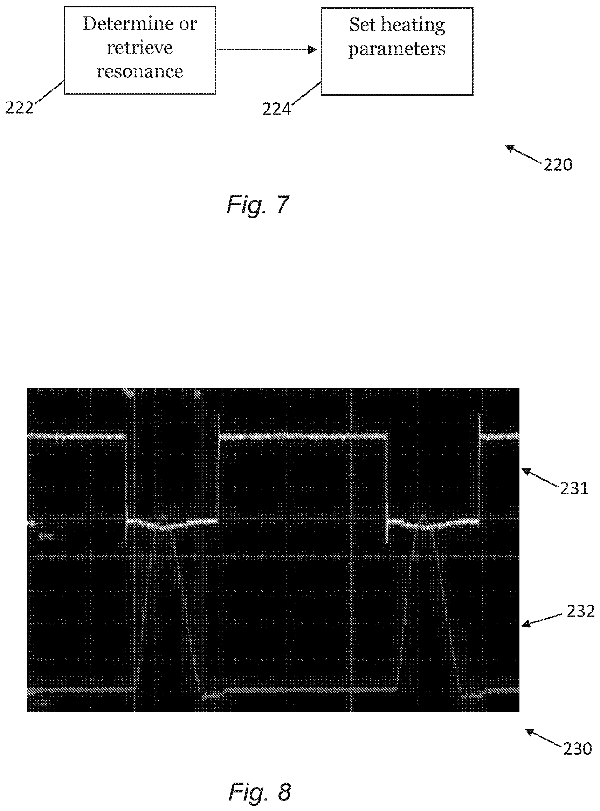

FIG. 7 is a flow chart showing an algorithm, indicated generally by the reference numeral 220, in accordance with an example embodiment. The algorithm 220 starts at operation 222, where a resonance of the resonant circuit 12 formed by the inductor 202 and the capacitor 204 is determined. Then, at operation 224, heating parameters are set based, at least in part, on the resonance determined in operation 222.

The algorithm 220 may form part of a system design process. Thus, for example, the heating parameters for the system may set based on the resonance parameters (e.g. based on designed resonance parameters) and then fixed. For example, the heating parameters may be stored within the control module 14 and not changed during the normal use of the system 200.

Setting the heating parameters in the operation 224 may comprise setting a duration of each second state in said heating phase of operation such that each instance of the second state has a duration that is at least half an oscillation cycle of the first resonant circuit that is expected to occur during normal operation of the apparatus. Further, setting the heating parameters in the operation 224 may comprise setting each instance of the first state to a fixed duration. In one example embodiments, details of the resonance may be stored in a memory and retrieved (in the operation 222) for use in setting parameters (in the operation 224).

FIG. 8 is a plot, indicated generally by the reference numeral 230, demonstrating an aspect of an example embodiment. The plot 230 includes a first signal 231 showing the voltage at the gate input of the transistor 206 and a second signal 232 that is the voltage across the transistor 206.

As indicated by the first signal 231, the transistor 206 is switched between the first state (where the transistor input is high and the transistor is conducting) and a second state (where the transistor input is low and the transistor is non-conducting) such that the circuit 200 is in a heating mode of operation.

In the first state, the transistor 206 is conducting such that no voltage appears across the transistor. In this state, a current flows from the voltage supply V_{DC} through the inductor 202, thereby charging the inductor. In the second state, the inductor 202 discharges, thereby charging the capacitor 204 - this results in a voltage appearing across the transistor 56.

As shown in the plot 230, the voltage across the transistor 206 starts to oscillate, but the oscillation is stopped by the return to the first state.

The heating parameters set in the operation 224 are set such that each instance of the second state has a duration that is at least half an oscillation cycle of the first resonant circuit. This is shown in FIG. 8, where the second signal shows the first half of the oscillation cycle completing just before each rising edge of the first signal 81.

It should be noted that the resonant frequency of the resonant circuit 12 may be variable (or at least have a tolerance), for example due to circuit tolerances, battery voltages, temperature etc. Accordingly, by setting the duration of the second state to be slightly longer than half an oscillation cycle of the first resonant circuit that is expected to occur during normal operation, it can be ensured that the voltage across the transistor can reduce to zero after each cycle.

In the heating phase of operation, the transistor 206 can be controlled to switch between the first and second states at a fixed frequency (e.g. 250kHZ). The duty cycle of the heat phase may be variable, for example based on the heating parameters defined in the operation 224.

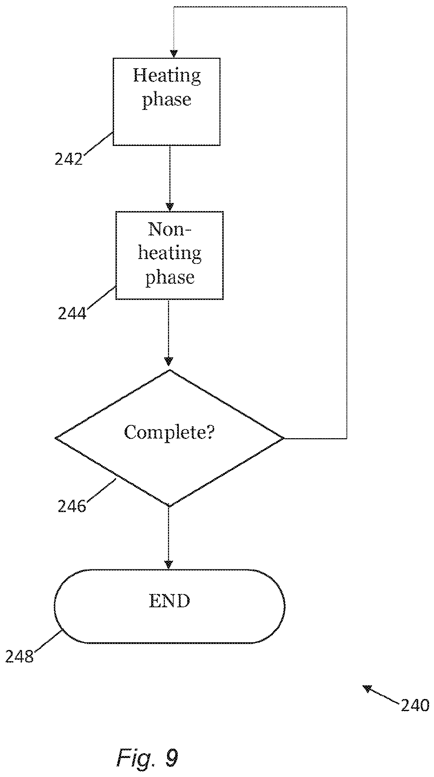

FIG. 9 is a flow chart showing an algorithm, indicated generally by the reference numeral 240, in accordance with an example embodiment.

The algorithm 240 starts at operation 242, where a heating phase of operation occurs. As discussed above, during the heating phase, the first switching arrangement (e.g. the transistor 206) switches between instances of the first state and instances of the second state, wherein each instance of the second state has a duration that is at least half an oscillation cycle of the first resonant circuit. Examples of the heating phase are shown in the portions 211 and 213 of the signal 210 described above.

Once the heating phase is complete, the algorithm 240 moves to operation 244, where a non-heating phase of operation occurs. As discussed above, during the non-heating phase, the transistor 206 is on and no inductive heating of the susceptor occurs. An example of the non-heating phase is shown in the portion 212 of the signal 210 described above.

At operation 246, a determination is made regarding whether the heating process is complete. If heating is complete, the algorithm 240 terminates at operation 248; otherwise, the algorithm returns to operation 242 where further heating is conducted (as shown by the portion 213 of the signal 210 described above).

Various parameters of the heating phase 242 and the non-heating phase 244 may be set in the operation 224 of the algorithm 220 described above (or set in the operation 254 discussed further below). For example, the duration of each phase (and the relative durations of the heating and non-heating phases) may be controllable. Alternatively, or in addition, the number of repetitions enabled by instances of the operation 246 may be variable.

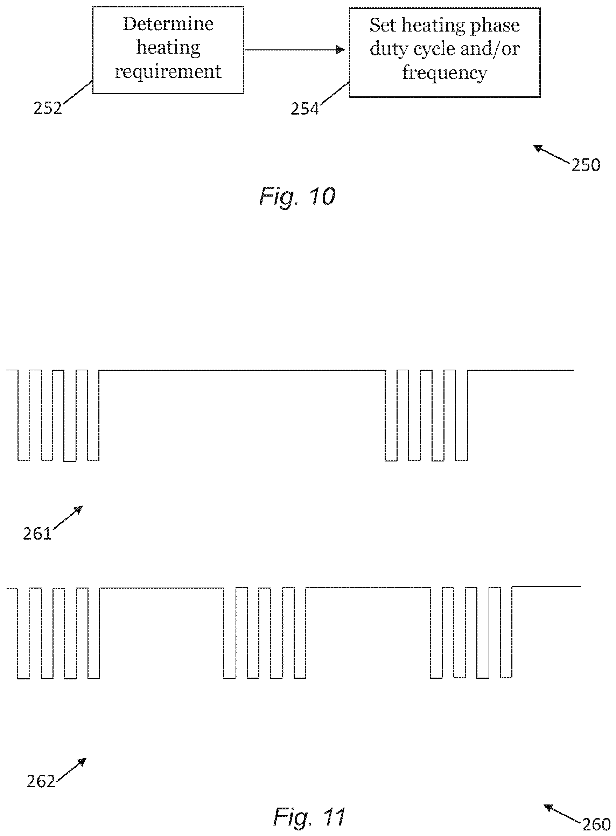

FIG. 10 is a flow chart showing an algorithm, indicated generally by the reference numeral 250, in accordance with an example embodiment.

The algorithm 250 starts at operation 252, where a heating requirement is determined. The heating requirement may be dependent, for example, on a temperature measurement (e.g. on a difference between a temperature requirement and a measured temperature). The operation 252 may, for example, determine whether a current level of heating should be increased or decreased.

At operation 254, parameters of the heating and non-heating phases described above are set. For example, a frequency of cycling between heating and non-heating phases may be varied. Alternatively, or in addition, a duty cycle of heating and non-heating phases may be varied.

FIG. 11 shows signals, indicated generally by the reference numeral 260, used in accordance with an example embodiment.

The signals 260 include a first signal 261 and a second signal 262. Both signal are examples of outputs of the control circuit 14 that are provided as inputs to the transistor 206.

As described above, the operation 254 can be used to vary the duty cycle of the control signal depending the heating requirement determine in the operation 252.

The first signal 261 has a relatively low duty cycle and may be used when the amount of heating required in relatively low. The second signal 262 has a higher duty cycle and may be used when the amount of heating required in higher. Note that the heating phases of the signals 261 and 262 are the same - it is the duration between the heating phases (i.e. the duration of the non-heating phase) that changes. This arrangement is not the only mechanism by which an amount of heating can be varied, for example the duration of the heating phase could be varied in order to increase or reduce the amount of heating within a given time period.

The circuit 200 can be used to drive a single resonant circuit. However, as described above, multiple resonant circuits may be provided such that different zones of an aerosol generating device can be heated by different resonant circuit.

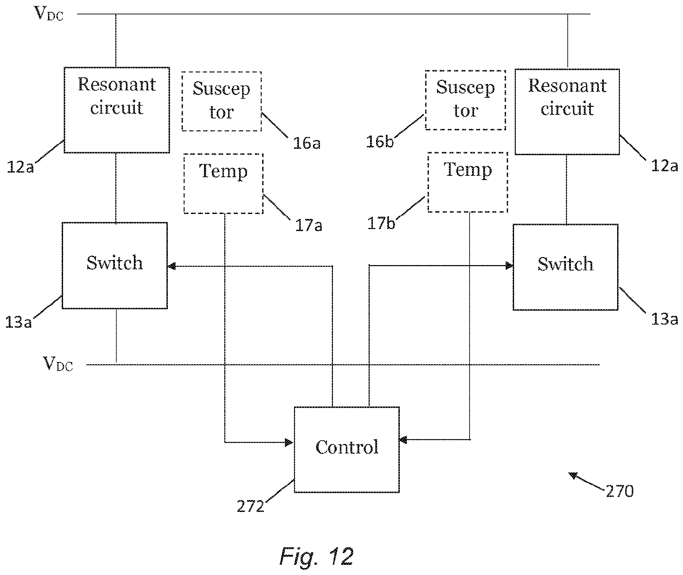

FIG. 12 is a block diagram of a system, indicated generally by the reference numeral 270, in accordance with an example embodiment. The system 270 is similar to the system 10 described above (and the circuit 200) but, as discussed in detail below, includes two resonant circuits (and interact with two susceptors).

The system 270 comprises a first resonance circuit 12a and a second resonant circuit 12b (both similar to the resonant circuit 12 described above), a first switching module 13a and a second switching module (both similar to the switching module 13 described above) and a control module 272. A power source (V_{DC}) in the form of a direct current (DC) voltage supply is provided to the resonant circuits 12a and 12b. The power source may, for example, be supplied by a battery.

As discussed in detail above, each of the resonant circuit 12a and 12b may comprise an inductor and a capacitor connected in parallel. The resonant circuit 12a may be used for inductively heating a first susceptor arrangement 16a and the resonant circuit 12b may be used for inductively heating a second susceptor arrangement. The first and second susceptor arrangements 16a and 16b may each heat an aerosol generating material (and may, for example heat different zones of the same aerosol generating material) in order to generate an aerosol.

The control module 272 receives inputs from a first temperature sensor 17a and a second temperature sensor 17b and provides control signals for switching the first switching module 13a and the second switching module 13b.

The control module 272 can therefore control heating and non-heating phases of operation of the resonant circuits 12a and 12b, for example in accordance with the algorithms 240 and 250 described above. The temperature sensor 17a and 17b may be used, for example, in an implementation of the operation 252.

As indicated above, the first and second susceptor arrangements 16a and 16b may each heat different zones of the same aerosol generating material in order to generate an aerosol. For example, the inductive element of the first resonant circuit 12a may be provided at or near a distal end of an aerosol generating device (or some other element to be heated) and the inductive element of the second resonant circuit 12b may be provide provided at or near a mouth end of an aerosol generating device (or some other element to be heated).

The control module 272 may separately control the first and second switching arrangements 13a and 13b. For example, the frequency and/or the duty cycle of the heating and non-heating phases of operation of the first and second resonant circuits 12a and 12b may be different and may, for example, be set dependent on heating requirements at the distal end and the mouth end of the element to be heated respectively.

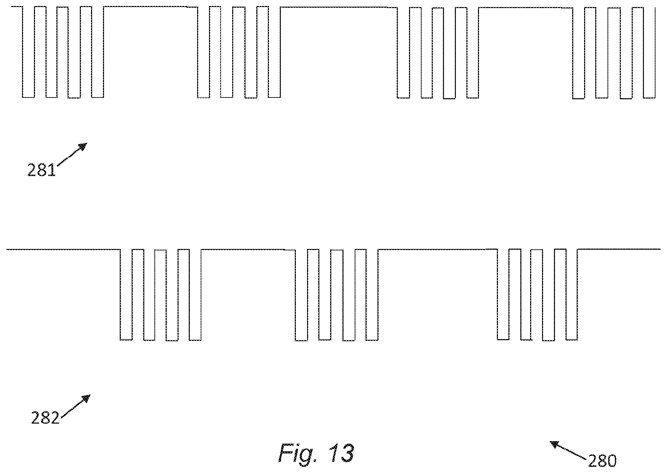

FIG. 13 shows signals, indicated generally by the reference numeral 280, used in accordance with an example embodiment. The signals 280 include a first signal 281 and a second signal 282. The first signal 281 may be a first output of the control module 272 (for example controlling the first switching module 13a) and the second signal 282 may be a second output of the control module 272 (for example for controlling the second switching module 13b).

The first signal 281 and the second signal 282 have the same frequency and duty cycle, but are set such that the heating modes of the first and second resonant circuits 13a and 13b are non-overlapping.

The first and second signals 281 and 282 are, in effect, the same signal with one signal shifted in time relative to the other. This is not essential to all example embodiments. For example, the frequency and/or the duty cycle of the first and second signals may be different, for example, if heating requirements of the respective susceptors are different.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein.

## Claims

1. An apparatus for an aerosol generating device comprising:
a first resonant circuit (12) comprising one or more inductive elements (202) and one or more capacitive elements (204), wherein the one or more inductive elements of the first resonant circuit are for inductively heating a first susceptor arrangement to heat an aerosol generating material to thereby generate an aerosol;
a first switching arrangement (206) having a first state and a second state, wherein, in the first state, a varying current generated from a voltage supply flows through the one or more inductive elements of the first resonant circuit and, in the second state, the first switching arrangement is non-conducting; and
a control module (14, 272) providing a first control signal for switching elements of the first switching arrangement, wherein the control module implements a heating phase of operation (211) and a non-heating phase of operation (212) of the first resonant circuit, wherein during the heating phase of operation, the first switching arrangement switches, under the control of the control module, between instances of the first state and instances of the second state, wherein each instance of the second state has a duration that is at least half an oscillation cycle of the first resonant circuit that is expected to occur during normal operation of the apparatus.

2. An apparatus as claimed in claim 1, wherein the one or more inductive elements (202) and one or more capacitive elements (204) are arranged in parallel and/or the first switching arrangement comprises a transistor switch.

3. An apparatus as claimed in claim 1 or claim 2, wherein each instance of the first state has a fixed duration.

4. An apparatus as claimed in any one of claims 1 to 3, wherein in the heating phase of operation (211), the first control signal switches the first switching arrangement between the first and second states at a fixed frequency, wherein the fixed frequency is optionally 250kHz.

5. An apparatus as claimed in any one of claims 1 to 4, wherein, the control module (14, 272) sets a frequency and/or a duty cycle of the heating and non-heating phases of operation, wherein, optionally:
the frequency and/or the duty cycle of the heating and non-heating phases of operation is set dependent on a heating requirement of the apparatus; and/or the frequency and/or the duty cycle of the heating and non-heating phases of operation is set dependent on a temperature measurement.

6. An apparatus as claimed in any one of claims 1 to 5, further comprising:
a second resonant circuit comprising one or more inductive elements and one or more capacitive elements, wherein the one or more inductive elements of the second resonant circuit are for inductively heating a second susceptor arrangement to heat an aerosol generating material to thereby generate an aerosol;
a second switching arrangement having a first state and a second state, wherein, in the first state, a varying current generated from the voltage supply flows through the one or more inductive elements of the second resonant circuit and, in the second state, the second switching arrangement is non-conducting;
wherein:
the control module (272) provides a second control signal for switching elements of the second switching arrangement, wherein the control module implements a heating phase of operation and a non-heating phase of operation of the second resonant circuit, wherein during the heating phase of operation, the second switching arrangement switches, under the control of the control module, between instances of the first state and instances of the second state, wherein each instance of the second state has a duration that is at least half an oscillation cycle of the second resonant circuit, wherein the second switching arrangement optionally comprises a transistor switch.

7. An apparatus as claimed in claim 6, wherein the inductive element of the first resonant circuit is provided at or near a distal end of an element to be heated and the inductive element of the second resonant circuit is provided at or near a mouth end of the element to be heated, wherein the frequency and/or the duty cycle of the heating and non-heating phases of operation of the first and second resonant circuits are optionally set dependent on heating requirements at the distal end and the mouth end of the element to be heated respectively.

8. An apparatus as claimed in claim 6 or claim 7, wherein, the control module sets a frequency and/or a duty cycle of the heating and non-heating phases of operation such that the heating modes of the first and second resonant circuits are non-overlapping.

9. An apparatus as claimed in any one of claims 1 to 8, wherein:
said inductive elements are inductive coils; and/or
said voltage supply is a DC voltage supply; and/or
the apparatus further comprises a temperature sensor for measuring a temperature of a device to heated.

10. A non-combustible aerosol generating device comprising an apparatus as claimed in any one of claims 1 to 9, wherein the apparatus optionally comprises a tobacco heating system.

11. A non-combustible aerosol generating device as claimed in claim 10, wherein the aerosol generating device is configured to receive a removable article comprising an aerosol generating material, wherein said aerosol generating material optionally comprises an aerosol generating substrate and an aerosol forming material and said removable article optionally includes said first susceptor arrangement.

12. A method comprising:
generating, obtaining or receiving a first control signal, at or from a control module, for switching elements of a first switching arrangement, wherein the control module implements a heating phase operation and a non-heating phase of operation of a first resonant circuit, wherein:
the first resonant circuit comprises one or more inductive elements and one or more capacitive elements, wherein the one or more inductive elements of the first resonant circuit are for inductively heating a first susceptor arrangement to heat an aerosol generating material to thereby generate an aerosol;
the first switching arrangement has a first state and a second state, wherein, in the first state, a varying current is generated from a voltage supply and flows through the one or more inductive elements of the first resonant circuit and, in the second state, the first switching arrangement is non-conducting; and
during the heating phase of operation, the first switching arrangement switches, under the control of the control module, between instances of the first state and instances of the second state; and
setting a duration of each second state in said heating phase of operation such that each instance of the second state has a duration that is at least half an oscillation cycle of the first resonant circuit that is expected to occur during normal operation.

13. A method as claimed in claim 12, wherein:
the one or more inductive elements and one or more capacitive elements are arranged in parallel; and/or
in the heating mode, the first control signal switches the first switching arrangement between the first and second states at a fixed frequency.

14. A method as claimed in claim 12 or 13, wherein, the control module sets a frequency and/or a duty cycle of the heating and non-heating phases of operation, wherein, optionally:
the frequency and/or the duty cycle of the heating and non-heating phases of operation is set dependent on a heating requirement; and/or
the frequency and/or the duty cycle of the heating and non-heating phases of operation is set dependent on a temperature measurement.

15. A method as claimed in any one of claims 12 to 14, further comprising:
generating, obtaining or receiving a second control signal, at or from the control module, for switching elements of a second switching arrangement, wherein the control module implements a heating phase operation and a non-heating phase of operation of a second resonant circuit, wherein:
the second resonant circuit comprises one or more inductive elements and one or more capacitive elements, wherein the one or more inductive elements of the second resonant circuit are for inductively heating a second susceptor arrangement to heat an aerosol generating material to thereby generate an aerosol;
the second switching arrangement has a first state and a second state, wherein, in the first state, a varying current is generated from a voltage supply and flows through the one or more inductive elements of the second resonant circuit and, in the second state, the second switching arrangement is non-conducting; and
during the heating phase of operation, the second switching arrangement switches, under the control of the control module, between instances of the first state and instances of the second state, wherein each instance of the second state has a duration that is at least half an oscillation cycle of the second resonant circuit.

16. A method as claimed in claim 15, wherein the inductive element of the first resonant circuit is provided at a distal end of an element to be heated and the inductive element of the second resonant circuit is provided at a mouth end of the element to be heated, wherein the frequency and/or the duty cycle of the heating and non-heating phases of operation of the first and second resonant circuits are optionally set dependent on heating requirement at the distal end and the mouth end of the element to be heated respectively.

17. A method as claimed in any one of claims 15 to 16, wherein, the control module sets a frequency and/or a duty cycle of the heating and non-heating phases of operation such that the heating modes of the first and second resonant circuits are non-overlapping.

18. A kit of parts comprising an article for use in a non-combustible aerosol generating system, wherein the non-combustible aerosol generating system comprises an apparatus as claimed in any one of claims 1 to 9 or a device as claimed in claim 10 or claim 11, wherein the article is optionally a removable article comprising an aerosol generating material.

19. A computer program comprising instructions for causing an apparatus to perform: generating, obtaining or receiving a first control signal, at or from a control module, for switching elements of a first switching arrangement, wherein the control module implements a heating phase operation and a non-heating phase of operation of a first resonant circuit, wherein:
the first resonant circuit comprises one or more inductive elements and one or more capacitive elements, wherein the one or more inductive elements of the first resonant circuit are for inductively heating a first susceptor arrangement to heat an aerosol generating material to thereby generate an aerosol;
the first switching arrangement has a first state and a second state, wherein, in the first state, a varying current is generated from a voltage supply and flows through the one or more inductive elements of the first resonant circuit and, in the second state, the first switching arrangement is non-conducting; and
during the heating phase of operation, the first switching arrangement switches, under the control of the control module, between instances of the first state and instances of the second state, wherein each instance of the second state has a duration that is at least half an oscillation cycle of the first resonant circuit that is expected to occur during normal operation of the apparatus.

## Patentansprüche

1. Einrichtung für eine Aerosolerzeugungsvorrichtung, umfassend:
einen ersten Schwingkreis (12), der ein oder mehrere induktive Elemente (202) und ein oder mehrere kapazitive Elemente (204) umfasst, wobei das eine oder die mehreren induktiven Elemente des ersten Schwingkreises zum induktiven Erhitzen einer ersten Suszeptoranordnung sind, um ein Aerosolerzeugungsmaterial zu erhitzen, um dadurch ein Aerosol zu erzeugen;
eine erste Schaltanordnung (206), die einen ersten Zustand und einen zweiten Zustand aufweist, wobei in dem ersten Zustand ein variierender Strom, der von einer Spannungsversorgung erzeugt wird, durch das eine oder die mehreren induktiven Elemente des ersten Schwingkreises fließt und in dem zweiten Zustand die erste Schaltanordnung nichtleitend ist; und
ein Steuermodul (14, 272), das ein erstes Steuersignal für Schaltelemente der ersten Schaltanordnung bereitstellt, wobei das Steuermodul eine Heizbetriebsphase (211) und eine Nichtheizbetriebsphase (212) des ersten Schwingkreises implementiert, wobei während der Heizbetriebsphase die erste Schaltanordnung unter der Steuerung des Steuermoduls zwischen Instanzen des ersten Zustands und Instanzen des zweiten Zustands schaltet, wobei jede Instanz des zweiten Zustands eine Dauer aufweist, die zumindest ein halber Oszillationszyklus des ersten Schwingkreises ist, der voraussichtlich während Normalbetrieb der Einrichtung auftritt.

2. Einrichtung nach Anspruch 1, wobei das eine oder die mehreren induktiven Elemente (202) und das eine oder die mehreren kapazitiven Elemente (204) parallel angeordnet sind und/oder die erste Schaltanordnung einen Transistorschalter umfasst.

3. Einrichtung nach Anspruch 1 oder Anspruch 2, wobei jede Instanz des ersten Zustands eine feste Dauer aufweist.

4. Einrichtung nach einem der Ansprüche 1 bis 3, wobei in der Heizbetriebsphase (211) das erste Steuersignal die erste Schaltanordnung zwischen dem ersten und dem zweiten Zustand mit einer festen Frequenz schaltet, wobei die feste Frequenz optional 250 kHz ist.

5. Einrichtung nach einem der Ansprüche 1 bis 4, wobei das Steuermodul (14, 272) eine Frequenz und/oder einen Tastzyklus der Heiz- und Nichtheizbetriebsphase einstellt, wobei optional:
die Frequenz und/oder der Tastzyklus der Heiz- und Nichtheizbetriebsphase abhängig von einem Heizbedarf der Einrichtung eingestellt werden; und/oder
die Frequenz und/oder der Tastzyklus der Heiz- und Nichtheizbetriebsphase abhängig von einer Temperaturmessung eingestellt werden.

6. Einrichtung nach einem der Ansprüche 1 bis 5, ferner umfassend:
einen zweiten Schwingkreis, der ein oder mehrere induktive Elemente und ein oder mehrere kapazitive Elemente umfasst, wobei das eine oder die mehreren induktiven Elemente des zweiten Schwingkreises zum induktiven Erhitzen einer zweiten Suszeptoranordnung sind, um ein Aerosolerzeugungsmaterial zu erhitzen, um dadurch ein Aerosol zu erzeugen;
eine zweite Schaltanordnung, die einen ersten Zustand und einen zweiten Zustand aufweist, wobei in dem ersten Zustand ein variierender Strom, der von der Spannungsversorgung erzeugt wird, durch das eine oder die mehreren induktiven Elemente des zweiten Schwingkreises fließt und in dem zweiten Zustand die zweite Schaltanordnung nichtleitend ist;
wobei:
das Steuermodul (272) ein zweites Steuersignal für Schaltelemente der zweiten Schaltanordnung bereitstellt, wobei das Steuermodul eine Heizbetriebsphase und eine Nichtheizbetriebsphase des zweiten Schwingkreises implementiert, wobei während der Heizbetriebsphase die zweite Schaltanordnung unter der Steuerung des Steuermoduls zwischen Instanzen des ersten Zustands und Instanzen des zweiten Zustands schaltet, wobei jede Instanz des zweiten Zustands eine Dauer aufweist, die zumindest ein halber Oszillationszyklus des zweiten Schwingkreises ist, wobei die zweite Schaltanordnung optional einen Transistorschalter umfasst.

7. Einrichtung nach Anspruch 6, wobei das induktive Element des ersten Schwingkreises an oder nahe einem distalen Ende eines zu erhitzenden Elements bereitgestellt ist und das induktive Element des zweiten Schwingkreises an oder nahe einem Mundende des zu erhitzenden Elements bereitgestellt ist, wobei die Frequenz und/oder der Tastzyklus der Heiz- und Nichtheizbetriebsphase des ersten und des zweiten Schwingkreises optional abhängig von Heizanforderungen jeweils an dem distalen Ende und dem Mundende des zu erhitzenden Elements eingestellt werden.

8. Einrichtung nach Anspruch 6 oder Anspruch 7, wobei das Steuermodul eine Frequenz und/oder einen Tastzyklus der Heiz- und Nichtheizbetriebsphase einstellt, sodass sich die Heizmodi des ersten und des zweiten Schwingkreises nicht überlappen.

9. Einrichtung nach einem der Ansprüche 1 bis 8, wobei:
die induktiven Elemente induktive Spulen sind; und/oder
die Spannungsversorgung eine DC-Spannungsversorgung ist; und/oder
die Einrichtung ferner einen Temperatursensor zum Messen einer Temperatur einer zu erhitzenden Vorrichtung umfasst.

10. Nichtbrennbare Aerosolerzeugungsvorrichtung, umfassend eine Einrichtung nach einem der Ansprüche 1 bis 9, wobei die Einrichtung optional ein Tabakheizsystem umfasst.

11. Nichtbrennbare Aerosolerzeugungsvorrichtung nach Anspruch 10, wobei die Aerosolerzeugungsvorrichtung dazu konfiguriert ist, einen entfernbaren Artikel aufzunehmen, der ein Aerosolerzeugungsmaterial umfasst, wobei das Aerosolerzeugungsmaterial optional ein Aerosolerzeugungssubstrat und ein Aerosolbildungsmaterial umfasst und der entfernbare Artikel optional die erste Suszeptoranordnung beinhaltet.

12. Verfahren, umfassend:
Erzeugen, Erhalten oder Empfangen eines ersten Steuersignals an oder von einem Steuermodul für Schaltelemente einer ersten Schaltanordnung, wobei das Steuermodul einen Heizphasenbetrieb und eine Nichtheizphasenbetrieb eines ersten Schwingkreises implementiert, wobei:
der erste Schwingkreis ein oder mehrere induktive Elemente und ein oder mehrere kapazitive Elemente umfasst, wobei das eine oder die mehreren induktiven Elemente des ersten Schwingkreises zum induktiven Erhitzen einer ersten Suszeptoranordnung sind, um ein Aerosolerzeugungsmaterial zu erhitzen, um dadurch ein Aerosol zu erzeugen;
die erste Schaltanordnung einen ersten Zustand und einen zweiten Zustand aufweist, wobei in dem ersten Zustand ein variierender Strom von einer Spannungsversorgung erzeugt wird und durch das eine oder die mehreren induktiven Elemente des ersten Schwingkreises fließt und in dem zweiten Zustand die erste Schaltanordnung nichtleitend ist; und
während der Heizbetriebsphase die erste Schaltanordnung unter der Steuerung des Steuermoduls zwischen Instanzen des ersten Zustands und Instanzen des zweiten Zustands schaltet; und
Einstellen einer Dauer jedes zweiten Zustands in der Heizbetriebsphase, sodass jede Instanz des zweiten Zustands eine Dauer aufweist, die zumindest ein halber Oszillationszyklus des ersten Schwingkreises ist, der voraussichtlich während Normalbetrieb auftritt.

13. Verfahren nach Anspruch 12, wobei:
das eine oder die mehreren induktiven Elemente und das eine oder die mehreren kapazitiven Elemente parallel angeordnet sind; und/oder
in dem Heizmodus das erste Steuersignal die erste Schaltanordnung zwischen dem ersten und dem zweiten Zustand mit einer festen Frequenz schaltet.

14. Verfahren nach Anspruch 12 oder 13, wobei das Steuermodul eine Frequenz und/oder einen Tastzyklus der Heiz- und Nichtheizbetriebsphase einstellt, wobei optional:
die Frequenz und/oder der Tastzyklus der Heiz- und Nichtheizbetriebsphase abhängig von einem Heizbedarf eingestellt werden; und/oder
die Frequenz und/oder der Tastzyklus der Heiz- und Nichtheizbetriebsphase abhängig von einer Temperaturmessung eingestellt werden.

15. Verfahren nach einem der Ansprüche 12 bis 14, ferner umfassend:
Erzeugen, Erhalten oder Empfangen eines zweiten Steuersignals an oder von dem Steuermodul für Schaltelemente einer zweiten Schaltanordnung, wobei das Steuermodul einen Heizphasenbetrieb und einen Nichtheizphasenbetrieb eines zweiten Schwingkreises implementiert, wobei:
der zweite Schwingkreis ein oder mehrere induktive Elemente und ein oder mehrere kapazitive Elemente umfasst, wobei das eine oder die mehreren induktiven Elemente des zweiten Schwingkreises zum induktiven Erhitzen einer zweiten Suszeptoranordnung sind, um ein Aerosolerzeugungsmaterial zu erhitzen, um dadurch ein Aerosol zu erzeugen;
die zweite Schaltanordnung einen ersten Zustand und einen zweiten Zustand aufweist, wobei in dem ersten Zustand ein variierender Strom von einer Spannungsversorgung erzeugt wird und durch das eine oder die mehreren induktiven Elemente des zweiten Schwingkreises fließt und in dem zweiten Zustand die zweite Schaltanordnung nichtleitend ist; und
während der Heizbetriebsphase die zweite Schaltanordnung unter der Steuerung des Steuermoduls zwischen Instanzen des ersten Zustands und Instanzen des zweiten Zustands schaltet, wobei jede Instanz des zweiten Zustands eine Dauer aufweist, die zumindest ein halber Oszillationszyklus des zweiten Schwingkreises ist.

16. Verfahren nach Anspruch 15, wobei das induktive Element des ersten Schwingkreises an einem distalen Ende eines zu erhitzenden Elements bereitgestellt ist und das induktive Element des zweiten Schwingkreises an einem Mundende des zu erhitzenden Elements bereitgestellt ist, wobei die Frequenz und/oder der Tastzyklus der Heiz- und Nichtheizbetriebsphase des ersten und des zweiten Schwingkreises optional abhängig von Heizbedarf jeweils an dem distalen Ende und dem Mundende des zu erhitzenden Elements eingestellt werden.

17. Verfahren nach einem der Ansprüche 15 bis 16, wobei das Steuermodul eine Frequenz und/oder einen Tastzyklus der Heiz- und Nichtheizbetriebsphase einstellt, sodass sich die Heizmodi des ersten und des zweiten Schwingkreises nicht überlappen.

18. Teilekit, umfassend einen Artikel zur Verwendung in einem nichtbrennbaren Aerosolerzeugungssystem, wobei das nichtbrennbare Aerosolerzeugungssystem eine Einrichtung nach einem der Ansprüche 1 bis 9 oder eine Vorrichtung nach Anspruch 10 oder Anspruch 11 umfasst, wobei der Artikel optional ein entfernbarer Artikel ist, der ein Aerosolerzeugungsmaterial umfasst.

19. Computerprogramm, umfassend Anweisungen, um zu bewirken, dass eine Einrichtung Folgendes durchführt: Erzeugen, Erhalten oder Empfangen eines ersten Steuersignals an oder von einem Steuermodul für Schaltelemente einer ersten Schaltanordnung, wobei das Steuermodul einen Heizphasenbetrieb und einen Nichtheizphasenbetrieb eines ersten Schwingkreises implementiert, wobei:
der erste Schwingkreis ein oder mehrere induktive Elemente und ein oder mehrere kapazitive Elemente umfasst, wobei das eine oder die mehreren induktiven Elemente des ersten Schwingkreises zum induktiven Erhitzen einer ersten Suszeptoranordnung sind, um ein Aerosolerzeugungsmaterial zu erhitzen, um dadurch ein Aerosol zu erzeugen;
die erste Schaltanordnung einen ersten Zustand und einen zweiten Zustand aufweist, wobei in dem ersten Zustand ein variierender Strom von einer Spannungsversorgung erzeugt wird und durch das eine oder die mehreren induktiven Elemente des ersten Schwingkreises fließt und in dem zweiten Zustand die erste Schaltanordnung nichtleitend ist; und
während der Heizbetriebsphase die erste Schaltanordnung unter der Steuerung des Steuermoduls zwischen Instanzen des ersten Zustands und Instanzen des zweiten Zustands schaltet, wobei jede Instanz des zweiten Zustands eine Dauer aufweist, die zumindest ein halber Oszillationszyklus des ersten Schwingkreises ist, der voraussichtlich während Normalbetrieb der Einrichtung auftritt.

## Revendications

1. Appareil pour dispositif de génération d'aérosol, comprenant :
un premier circuit résonant (12) comprenant un ou plusieurs éléments inductifs (202) et un ou plusieurs éléments capacitifs (204), dans lequel les un ou plusieurs éléments inductifs du premier circuit résonant sont destinés à chauffer par induction un premier agencement suscepteur pour chauffer un matériau de génération d'aérosol pour générer ainsi un aérosol ;
un premier agencement de commutation (206) présentant un premier état et un second état, dans lequel, dans le premier état, un courant variable généré par une alimentation en tension s'écoule à travers les un ou plusieurs éléments inductifs du premier circuit résonant et, dans le second état, le premier agencement de commutation est non conducteur ; et
un module de commande (14, 272) fournissant un premier signal de commande pour faire commuter des éléments du premier agencement de commutation, dans lequel le module de commande met en œuvre une phase de fonctionnement de chauffage (211) et une phase de fonctionnement de non chauffage (212) du premier circuit résonant, dans lequel pendant la phase de fonctionnement de chauffage, le premier agencement de commutation commute, sous la commande du module de commande, entre des instances du premier état et des instances du second état, dans lequel chaque instance du second état présente une durée qui est au moins la moitié d'un cycle d'oscillation du premier circuit résonant qui devrait se produire pendant le fonctionnement normal de l'appareil.

2. Appareil selon la revendication 1, dans lequel les un ou plusieurs éléments inductifs (202) et un ou plusieurs éléments capacitifs (204) sont agencés en parallèle et/ou le premier agencement de commutation comprend un commutateur à transistor.

3. Appareil selon la revendication 1 ou la revendication 2, dans lequel chaque instance du premier état présente une durée fixe.

4. Appareil selon l'une quelconque des revendications 1 à 3, dans lequel dans la phase de fonctionnement de chauffage (211), le premier signal de commande fait commuter le premier agencement de commutation entre les premier et second états à une fréquence fixe, dans lequel la fréquence fixe est éventuellement de 250 kHz.

5. Appareil selon l'une quelconque des revendications 1 à 4, dans lequel le module de commande (14, 272) définit une fréquence et/ou un cycle de service des phases de fonctionnement de chauffage et de non chauffage, dans lequel, éventuellement :
la fréquence et/ou le cycle de service des phases de fonctionnement de chauffage et de non chauffage est défini en fonction d'une exigence de chauffage de l'appareil ; et/ou
la fréquence et/ou le cycle de service des phases de fonctionnement de chauffage et de non chauffage est défini en fonction d'une mesure de température.

6. Appareil selon une quelconque des revendications 1 à 5, comprenant en outre :
un second circuit résonant comprenant un ou plusieurs éléments inductifs et un ou plusieurs éléments capacitifs, dans lequel les un ou plusieurs éléments inductifs du second circuit résonant sont destinés à chauffer par induction un second agencement suscepteur pour chauffer un matériau de génération d'aérosol pour générer ainsi un aérosol ;
un second agencement de commutation présentant un premier état et un second état, dans lequel, dans le premier état, un courant variable généré par l'alimentation en tension s'écoule à travers les un ou plusieurs éléments inductifs du second circuit résonant et, dans le second état, le second agencement de commutation est non conducteur ;
dans lequel :
le module de commande (272) fournit un second signal de commande pour faire commuter des éléments du second agencement de commutation, dans lequel le module de commande met en œuvre une phase de fonctionnement de chauffage et une phase de fonctionnement de non chauffage du second circuit résonant, dans lequel pendant la phase de fonctionnement de chauffage, le second agencement de commutation commute, sous la commande du module de commande, entre des instances du premier état et des instances du second état, dans lequel chaque instance du second état présente une durée qui est au moins la moitié d'un cycle d'oscillation du second circuit résonant, dans lequel le second agencement de commutation comprend éventuellement un commutateur à transistor.

7. Appareil selon la revendication 6, dans lequel l'élément inductif du premier circuit résonant est ménagé au niveau ou à proximité d'une extrémité distale d'un élément à chauffer et l'élément inductif du second circuit résonant est ménagé au niveau ou à proximité d'une extrémité d'embouchure de l'élément à chauffer, dans lequel la fréquence et/ou le cycle de service des phases de fonctionnement de chauffage et de non chauffage des premier et second circuits résonants sont éventuellement définis en fonction d'exigences de chauffage à l'extrémité distale et à l'extrémité d'embouchure de l'élément à chauffer respectivement.

8. Appareil selon la revendication 6 ou la revendication 7, dans lequel le module de commande définit une fréquence et/ou un cycle de service des phases de fonctionnement de chauffage et de non chauffage de sorte que les modes de chauffage des premier et second circuits résonants ne se chevauchent pas.

9. Appareil selon l'une quelconque des revendications 1 à 8, dans lequel :
lesdits éléments inductifs sont des bobines inductives ; et/ou
ladite alimentation en tension est une alimentation en tension CC ; et/ou
l'appareil comprend en outre un capteur de température pour mesurer une température d'un dispositif à chauffer.

10. Dispositif de génération d'aérosol non combustible comprenant un appareil selon l'une quelconque des revendications 1 à 9, dans lequel l'appareil comprend éventuellement un système de chauffage de tabac.

11. Dispositif de génération d'aérosol non combustible selon la revendication 10, dans lequel le dispositif de génération d'aérosol est conçu pour recevoir un article amovible comprenant un matériau de génération d'aérosol, dans lequel ledit matériau de génération d'aérosol comprend éventuellement un substrat de génération d'aérosol et un matériau de formation d'aérosol et ledit article amovible comprend éventuellement ledit premier agencement de suscepteur.

12. Procédé comprenant :
la génération, l'obtention ou la réception d'un premier signal de commande, au niveau ou à partir d'un module de commande, pour faire commuter des éléments d'un premier agencement de commutation, dans lequel le module de commande met en œuvre une phase de fonctionnement de chauffage et une phase de fonctionnement de non chauffage d'un premier circuit résonant, dans lequel :
le premier circuit résonant comprend un ou plusieurs éléments inductifs et un ou plusieurs éléments capacitifs, dans lequel les un ou plusieurs éléments inductifs du premier circuit résonant sont destinés à chauffer par induction un premier agencement suscepteur pour chauffer un matériau de génération d'aérosol pour générer ainsi un aérosol ;
le premier agencement de commutation présente un premier état et un second état, dans lequel, dans le premier état, un courant variable est généré par une alimentation en tension et s'écoule à travers les un ou plusieurs éléments inductifs du premier circuit résonant et, dans le second état, le premier agencement de commutation est non conducteur ; et
pendant la phase de fonctionnement de chauffage, le premier agencement de commutation commute, sous la commande du module de commande, entre des instances du premier état et des instances du second état, et
la définition d'une durée de chaque second état dans ladite phase de fonctionnement de chauffage de sorte que chaque instance du second état présente une durée qui est au moins la moitié d'un cycle d'oscillation du premier circuit résonant qui devrait se produire pendant le fonctionnement normal.

13. Procédé selon la revendication 12, dans lequel :
les un ou plusieurs éléments inductifs et un ou plusieurs éléments capacitifs sont agencés en parallèle ; et/ou
dans le mode de chauffage, le premier signal de commande fait commuter le premier agencement de commutation entre les premier et second états à une fréquence fixe.

14. Procédé selon la revendication 12 ou 13, dans lequel le module de commande définit une fréquence et/ou un cycle de service des phases de fonctionnement de chauffage et de non chauffage, dans lequel, éventuellement :
la fréquence et/ou le cycle de service des phases de fonctionnement de chauffage et de non chauffage est défini en fonction d'une exigence de chauffage ; et/ou
la fréquence et/ou le cycle de service des phases de fonctionnement de chauffage et de non chauffage est défini en fonction d'une mesure de température.

15. Procédé selon l'une quelconque des revendications 12 à 14, comprenant en outre :
la génération, l'obtention ou la réception d'un second signal de commande, au niveau ou à partir du module de commande, pour faire commuter des éléments d'un second agencement de commutation, dans lequel le module de commande met en œuvre une phase de fonctionnement de chauffage et une phase de fonctionnement de non chauffage d'un second circuit résonant, dans lequel :
le second circuit résonant comprend un ou plusieurs éléments inductifs et un ou plusieurs éléments capacitifs, dans lequel les un ou plusieurs éléments inductifs du second circuit résonant sont destinés à chauffer par induction un second agencement suscepteur pour chauffer un matériau de génération d'aérosol pour générer ainsi un aérosol ;
le second agencement de commutation présente un premier état et un second état, dans lequel, dans le premier état, un courant variable est généré par une alimentation en tension et s'écoule à travers les un ou plusieurs éléments inductifs du second circuit résonant et, dans le second état, le second agencement de commutation est non conducteur ; et
pendant la phase de fonctionnement de chauffage, le second agencement de commutation commute, sous la commande du module de commande, entre des instances du premier état et des instances du second état, dans lequel chaque instance du second état présente une durée qui est au moins la moitié d'un cycle d'oscillation du second circuit résonant.

16. Procédé selon la revendication 15, dans lequel l'élément inductif du premier circuit résonant est ménagé à une extrémité distale d'un élément à chauffer et l'élément inductif du second circuit résonant est ménagé à une extrémité d'embouchure de l'élément à chauffer, dans lequel la fréquence et/ou le cycle de service des phases de fonctionnement de chauffage et de non chauffage des premier et second circuits résonants sont éventuellement définis en fonction de l'exigence de chauffage à l'extrémité distale et à l'extrémité d'embouchure de l'élément à chauffer respectivement.

17. Procédé selon l'une quelconque des revendications 15 à 16, dans lequel le module de commande définit une fréquence et/ou un cycle de service des phases de fonctionnement de chauffage et de non chauffage de sorte que les modes de chauffage des premier et second circuits résonants ne se chevauchent pas.

18. Kit de pièces comprenant un article destiné à être utilisé dans un système de génération d'aérosol non combustible, dans lequel le système de génération d'aérosol non combustible comprend un appareil selon l'une quelconque des revendications 1 à 9 ou un dispositif selon la revendication 10 ou la revendication 11, dans lequel l'article est éventuellement un article amovible comprenant un matériau de génération d'aérosol.

19. Programme informatique comprenant des instructions pour amener un appareil à réaliser : la génération, l'obtention ou la réception d'un premier signal de commande, au niveau ou à partir d'un module de commande, pour faire commuter des éléments d'un premier agencement de commutation, dans lequel le module de commande met en œuvre une phase de fonctionnement de chauffage et une phase de fonctionnement de non chauffage d'un premier circuit résonant, dans lequel :
le premier circuit résonant comprend un ou plusieurs éléments inductifs et un ou plusieurs éléments capacitifs, dans lequel les un ou plusieurs éléments inductifs du premier circuit résonant sont destinés à chauffer par induction un premier agencement suscepteur pour chauffer un matériau de génération d'aérosol pour générer ainsi un aérosol ;
le premier agencement de commutation présente un premier état et un second état, dans lequel, dans le premier état, un courant variable est généré par une alimentation en tension et s'écoule à travers les un ou plusieurs éléments inductifs du premier circuit résonant et, dans le second état, le premier agencement de commutation est non conducteur ; et
pendant la phase de fonctionnement de chauffage, le premier agencement de commutation commute, sous la commande du module de commande, entre des instances du premier état et des instances du second état, dans lequel chaque instance du second état présente une durée qui est au moins la moitié d'un cycle d'oscillation du premier circuit résonant qui est censé se produire pendant le fonctionnement normal de l'appareil.
